(19) Europäisches Patentamt
European Patent Office
Office européen des brevets

(11) **EP 3 962 109 A1**

(12) **EUROPEAN PATENT APPLICATION**
published in accordance with Art. 153(4) EPC

(43) Date of publication:
**02.03.2022 Bulletin 2022/09**

(21) Application number: **20794693.0**

(22) Date of filing: **20.04.2020**

(51) International Patent Classification (IPC):
***H04R 7/10*** *(2006.01)* ***H04R 9/06*** *(2006.01)*
***H04R 9/02*** *(2006.01)*

(52) Cooperative Patent Classification (CPC):
**H04R 7/10; H04R 9/02; H04R 9/06**

(86) International application number:
**PCT/CN2020/085641**

(87) International publication number:
**WO 2020/216179 (29.10.2020 Gazette 2020/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **24.04.2019 CN 201910336058**

(71) Applicant: **Goertek Inc**
**Weifang, Shandong 261031 (CN)**

(72) Inventors:
- **HUI, Bing**
  **Weifang, Shandong 261031 (CN)**
- **LING, Fengguang**
  **Weifang, Shandong 261031 (CN)**
- **WANG, Ting**
  **Weifang, Shandong 261031 (CN)**
- **LI, Chun**
  **Weifang, Shandong 261031 (CN)**
- **LIU, Chunfa**
  **Weifang, Shandong 261031 (CN)**

(74) Representative: **Hübner, Gerd**
**Rau, Schneck & Hübner**
**Patentanwälte Rechtsanwälte PartGmbB**
**Königstraße 2**
**90402 Nürnberg (DE)**

# (54) VIBRATING DIAPHRAGM FOR MINIATURE SOUND-PRODUCING DEVICE AND MINIATURE SOUND-PRODUCING DEVICE

(57) Disclosed are a diaphragm for a miniature sound-generating device, and a miniature sound-generating device. The diaphragm for a miniature sound-generating device is made of a polyacrylate copolymer, the polyacrylate copolymer is mixed with a plasticizer comprising at least one of aliphatic diacid esters, phthalic acid esters, phenyl polyacid esters, benzoates, polyhydric alcohol esters, chlorinated hydrocarbons, epoxides, citrates and polyesters, the glass transition temperature of the diaphragm is in the range of -70 °C to 0 °C, and the diaphragm is configured such that the adhesive force between the diaphragm and an adhesive layer during assembly is greater than 100 g/25 mm (180° peeling). The diaphragm provided in this disclosure possesses excellent sound performance. (Fig. 8)

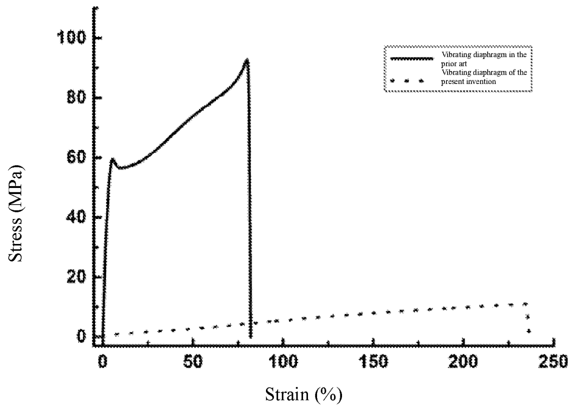


FIG. 8

EP 3 962 109 A1

## Description

## TECHNICAL FIELD

The present disclosure relates to the technical field of electronic products, and particularly relates to a diaphragm for a miniature sound-generating device and the miniature sound-generating device.

## BACKGROUND

A diaphragm for a sound-generating device generally adopts a multi-layer composite, such as engineering plastics comprising PEEK, PAR, PEI, PI, etc., elastomer materials comprising TPU, TPEE, etc., and adhesive films comprising acrylic adhesive film, silicone adhesive film, etc. In addition, due to the increasingly higher requirement for high power, water resistance and high tone quality, silicone rubber also has been gradually used to make diaphragms for its good thermal stability, good hydrophobic properties and excellent resilience. However, in recent years, with increasing demands on small electronic devices such as mobile phones and tablet computers, it is necessary to configure a miniature sound-generating device with smaller size and better performance in the electronic devices. This demand leads to the fact that existing commonly used composites cannot meet the performance demands.

The above materials all suffer from their own drawbacks. For example, engineering plastics comprising PEEK, PAR, etc. have good temperature resistance but poor resilience, and the products are prone to film folding and cannot play a waterproof role. Elastomer materials comprising TPU, TPEE, etc. have a low melting point and poor temperature resistance. Due to its symmetrical chemical structure, high stereoregularity, small steric hindrance of symmetrically substituted methyl and relatively low modulus or hardness, the silicon rubber material that exhibits good thermal stability and resilience has low damping performance, which causes large product distortion of the silicon rubber diaphragm.

As can be seen, the diaphragm with poor combination properties cannot meet the comprehensive performance demands of the miniature sound-generating device. Therefore, providing a diaphragm for a miniature sound-generating device with superior combination properties and high reliability becomes a major technical challenge in the art.

## SUMMARY

An object of the present disclosure is to provide a new technical solution of a diaphragm for a miniature sound-generating device.

According to a first aspect of the present disclosure, the diaphragm for the miniature sound-generating device is provided, the diaphragm is made of a polyacrylate copolymer, the polyacrylate copolymer is mixed with a plasticizer comprising at least one of aliphatic diacid esters, phthalic acid esters, phenyl polyacid esters, benzoates, polyhydric alcohol esters, chlorinated hydrocarbons, epoxides, citrates and polyesters, the glass transition temperature of the diaphragm is in the range of -70 °C to 0 °C, and the diaphragm is configured such that the adhesive force between the diaphragm and an adhesive layer during assembly is greater than 100 g/25 mm (180° peeling).

Optionally, the polyacrylate copolymer is made by crosslinking polymerization of alkyl acrylate serving as a main polymerization monomer and a crosslinking monomer, and the glass transition temperature of the diaphragm is in the range of -60 °C to 0 °C.

Optionally, the glass transition temperature of the diaphragm is in the range of -50 °C to - 20 °C.

Optionally, the polyacrylate copolymer itself is 100 parts by mass, and the plasticizer itself is 1-13 parts by mass.

Optionally, the polyacrylate copolymer is mixed with a vulcanizing agent, the polyacrylate copolymer itself is 100 parts by mass, and the vulcanizing agent itself is 0.5-5 parts by mass.

Optionally, the polyacrylate copolymer comprises at least one of an "ethylene-acrylate copolymer" and an "ethylene-acrylate-carboxylic acid copolymer".

Optionally, the glass transition temperature of the diaphragm is in the range of -60 °C to - 20 °C.

Optionally, the polyacrylate copolymer itself is 100 parts by mass, and the plasticizer itself is 1-10 parts by mass.

Optionally, the adhesive force between the diaphragm and the adhesive layer is greater than 200 g/25 mm (180° peeling).

Optionally, the polyacrylate copolymer is mixed with an internal releasing agent comprising at least one of stearic acid and stearate, octadecyl amine and alkyl phosphate, and $\alpha$-octadecyl-3-hydroxy polyoxyethylene phosphate, the polyacrylate copolymer itself is 100 parts by mass, and the internal releasing agent itself is 0.5-5 parts by mass.

Optionally, the internal releasing agent itself is 1-3 parts by mass.

Optionally, the diaphragm is a single-layer diaphragm formed by a polyacrylate copolymer film layer;

or the diaphragm is a composite diaphragm comprising two, three, four or five film layers and comprising at least one polyacrylate copolymer film layer.

Optionally, the polyacrylate copolymer film layer has a thickness of 10-200 $\mu$m.

Optionally, the polyacrylate copolymer film layer has a thickness of 30-120 $\mu$m.

Optionally, the type of the adhesive layer comprises one or more of epoxides, acrylic acids, organic silicon resins, polyesters, polyurethanes, hydroxyl-modified vinyl resins, phenolic resins, and urea resins.

According to another aspect of the present disclosure, the miniature sound-generating device is also provided, comprising a sound-generating device body and the diaphragm described above, the diaphragm is arranged on the sound-generating device body, and the diaphragm is configured to produce sound by vibration.

According to an embodiment disclosed by the present disclosure, the diaphragm has better acoustic performance and higher use stability.

Other features and advantages of the present disclosure will become apparent from the following detailed description of exemplary embodiments of the present disclosure by reference to the drawings.

## BRIEF DESCRIPTION OF THE DRAWINGS

The drawings, which are incorporated in and constitute a part of the specification, illustrate embodiments of the present disclosure and serve to explain the principles of the present disclosure together with the specification.

FIG. 1 is a diagram of the influence of the mass ratio of a polyethylene block to a polyacrylate block of a diaphragm provided by the present disclosure on glass transition temperature and mechanical strength;
FIG. 2 is a diagram of the influence of a polycarboxylic acid block of the diaphragm provided by the present disclosure on the glass transition temperature and the elongation at break;
FIG. 3 is a diagram of the influence of the dosage of a vulcanizing agent provided by the present disclosure on the glass transition temperature and the elongation at break;
FIG. 4 is a diagram of the relationship between the mixing amount of a plasticizer of the diaphragm provided by the present disclosure and the glass transition temperature and mechanical strength of the material, the diaphragm being made of an ACM polymer;
FIG. 5 is a diagram of the relationship between the mixing amount of a plasticizer of the diaphragm provided by the present disclosure and the glass transition temperature and mechanical strength of the material, the diaphragm being made of an AEM polymer;
FIG. 6 is a diagram of the relationship between a stress-strain curve of the diaphragm provided by the present disclosure and the parts of carbon black mixed, the diaphragm being made of an ACM polymer;
FIG. 7 is a diagram of the relationship between a stress-strain curve of the diaphragm provided by the present disclosure and the parts of carbon black mixed, the diaphragm being made of an AEM polymer;
FIG. 8 is a comparison diagram of stress-strain curves of the diaphragm provided by the present disclosure and an existing diaphragm;
FIG. 9 is a comparison diagram of harmonic distortion test curves of the diaphragm provided by the present disclosure and the existing diaphragm;
FIG. 10 is a comparison diagram of higher harmonic distortion test curves of the diaphragm provided by the present disclosure and the existing diaphragm;
FIG. 11 is a test curve diagram of vibrating displacements of different parts of the diaphragm provided by the present disclosure at different frequencies;
FIG. 12 is a test curve diagram of vibrating displacements of different parts of a diaphragm in the prior art at different frequencies;
FIG. 13 is a comparison diagram of impedance curves of diaphragms having different hardnesses in different embodiments of the present disclosure;
FIG. 14 is a comparison diagram of loudness test curves of the diaphragm provided by the present disclosure and the existing diaphragm at different frequencies.

## DETAILED DESCRIPTION

Various exemplary embodiments of the present disclosure are now be described in detail by reference to the drawings. It should be noted that: unless otherwise specified, the relative arrangement of components and steps, the numerical expressions, and the numerical values set forth in these embodiments do not limit the scope of the present disclosure.

The description of at least one exemplary embodiment below is in fact merely illustrative, and is in no way intended to limit the present disclosure and application or use thereof.

Techniques, methods, and apparatus known to those with ordinary skill in the relevant art may not be discussed in detail but should be deemed as part of the specification when appropriate.

In all examples shown and discussed herein, any specific value should be construed as being exemplary rather

than limiting. Therefore, other examples of the exemplary embodiments may have different values.

It should be noted that: like reference numbers and letters refer to like items in the following drawings. Therefore, once an item is defined in one drawing, it does not need to be discussed further in subsequent drawings.

The present disclosure provides a diaphragm for a sound-generating device, the diaphragm being made of a polyacrylate copolymer. The material formed by polymerization of polyacrylate as a body is polyacrylate rubber.

The polyacrylate copolymer of the present application specifically can comprise two different materials that both belong to the polyacrylate rubber and both can achieve the technical effect required by the present disclosure.

In one of the embodiments, the polyacrylate copolymer comprises an "ethylene-acrylate copolymer", which is an AEM copolymer. The molecular formula of the "ethylene-acrylate copolymer" may be shown as follows:

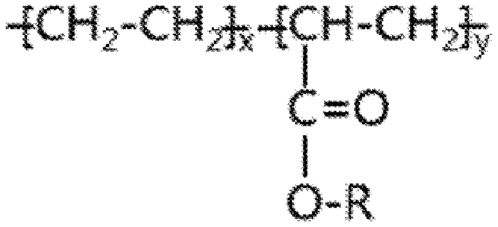

In the above molecular formula, x and y are natural numbers; and R is alkyl.

In particular, the mass ratio of the polyethylene block to the polyacrylate block is 0.05-10. The polyethylene block provides toughness in a material matrix, so that the rubber has better low-temperature resistance. If the content of the polyethylene block is extremely high, the rigidity of the polyacrylate rubber is insufficient, and the use requirement is difficult to meet. As shown in FIG. 1, with the increase of the ratio of the polyethylene block to the polyacrylate block, the glass transition temperature of the material gradually decreases, and the mechanical strength firstly keep constant, followed by rapid decrease. Particularly, when the ratio is 15, the mechanical strength of the material only remains 6.3 MPa. Therefore, the present disclosure preferably limits the mass ratio of the polyethylene block to the polyacrylate block into a range of 0.05-10, which not only can meet the requirements of the diaphragm for mechanical properties such as toughness, but also can provide good low-temperature resistance. The mass ratio of the polyethylene block to the polyacrylate block is preferably 0.1-5.

Further optionally, the polyacrylate copolymer may also comprise an "ethylene-acrylate-carboxylic acid copolymer". The molecular formula of the "ethylene-acrylate-carboxylic acid copolymer" is shown as follows:

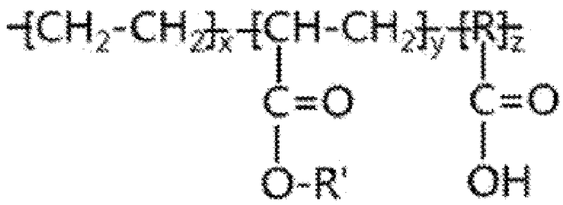

In the above molecular formula, x, y and z are natural numbers; and R and R' are alkyl.

In particular, the mass ratio of the polyethylene block to the polyacrylate block is 0.1-10. The polycarboxylic acid block accounts for 0.5-10 wt% of the total mass of the polyacrylate copolymer and has a crosslinking effect in the matrix, and when its content is higher, the crosslinking degree of the material matrix is higher, and the material rigidity is higher. However, an excessively high crosslinking degree will cause the rubber to lose its high elasticity. An excessively high mass percent of the polycarboxylic acid block will result in excessively high crosslinking degree and remarkably reduced elasticity to the polyacrylate rubber. FIG. 2 shows the influence of the percent content of the polycarboxylic acid block on the glass transition temperature and the elongation at break of the material. It can be seen from this figure that with the increase of the mass percent of the polycarboxylic acid block, the crosslinking degree of the material increases, the movement of molecular chains is restricted, the glass transition temperature increases, and the elongation at break decreases. Therefore, the present disclosure limits the mass percent of the polycarboxylic acid block in the total mass of the polyacrylate copolymer into a range of 0.5-10 wt% , so that the polyacrylate copolymer has a glass transition temperature and an elongation at break that meet the performance requirements. The mass ratio of the polyethylene block to the polyacrylate block is preferably in a range of 0.2-5, and the polycarboxylic acid block accounts for 1-5 wt% of the total mass of the polyacrylate copolymer.

In another embodiment, the polyacrylate copolymer is made by crosslinking polymerization of alkyl acrylate as a main polymerization monomer and a crosslinking monomer, the polyacrylate copolymer being an ACM copolymer.

The molecular formula of the ACM copolymer is optionally shown as follows:

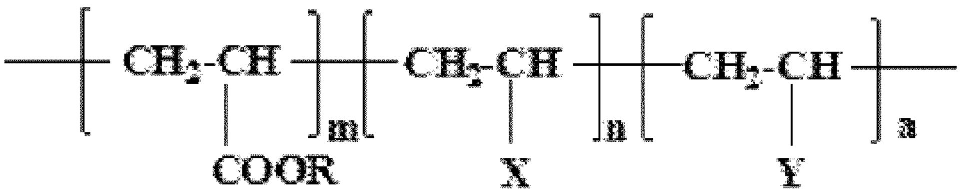

In the above molecular formula, R may be at least one of an alkyl main monomer, an ethyl main monomer, a methyl main monomer, or a n-butyl main monomer;

X is a COO $(CH_2)_2OCH_3$-CN comonomer;
Y is at least one of a -COOH crosslinking functional group, a $-OCOCH_2Cl$ crosslinking functional group, a $-OCH_2CH_2Cl$ crosslinking functional group, an epoxy crosslinking functional group or an unsaturated alkene group; and
m, n and a are natural numbers.

The polyacrylate rubber has a high damping factor that is affected by factors comprising the crosslinking degree, the intermolecular hydrogen bonds, the plasticizer content and the like. When there is a higher crosslinking degree, a larger quantity of intermolecular hydrogen bonds, a higher plasticizer content and the like within a certain range, the damping factor is higher, the damping performance is better, and the distortion of the diaphragm during sound producing is lower.

The content of the polyacrylate block affects the quantity of intermolecular hydrogen bonds. When the content of the polyacrylate block is higher, the quantity of intermolecular hydrogen bonds is larger, and the molecular chains move more difficulty. Accordingly, if the glass transition temperature increases, the damping factor increases. The intermolecular hydrogen bonds belong to physical entanglement. The larger quantity of intermolecular hydrogen bonds within a certain range would result in higher mechanical strength of the material. However, the influence of the quantity of intermolecular hydrogen bonds on the mechanical strength is smaller than that of the crosslinking degree on the mechanical strength of the material.

Optionally, the ACM copolymer is mixed with a vulcanizing agent. The polyacrylate copolymer is 100 parts by mass, and the vulcanizing agent itself is 0.5-5 parts by mass. The addition of the vulcanizing agent helps to form crosslinking points in the polyacrylate copolymer, improving the crosslinking degree of the copolymer. But, if the mixing amount of the vulcanizing agent is too large, as shown in FIG. 3, the crosslinking degree of the polyacrylate copolymer will significantly increase, which further results in limited movement of molecular chains in the copolymer, increased glass transition temperature and reduced elongation at break. Therefore, in the embodiment of the present disclosure, the vulcanizing agent itself is 0.5-5 parts by mass. Preferably, the vulcanizing agent itself is 0.8-3 parts by mass. The vulcanizing agent with the above parts by mass not only can ensure the polyacrylate copolymer having a proper crosslinking degree, but also can meet the requirements of the material for the glass transition temperature and the mechanical property.

Optionally, the vulcanizing agent comprises at least one of a trimercapto-s-triazine vulcanizing system, polyamine, organic acid, ammonium salt, ammonium salt of organic acid, dithiocarbamate, imidazole/anhydride, isocyanuric acid/quaternary salt, sulfur/accelerator, and peroxide.

Optionally, the polyacrylate copolymer may be mixed with a plasticizer comprising at least one of aliphatic diacid esters, phthalic acid esters, phenyl polyacid esters, benzoates, polyhydric alcohol esters, chlorinated hydrocarbons, epoxides, citrates and polyesters.

Polar groups on the plasticizer and polar groups on the polyacrylate block have an interattraction effect, which reduces the interaction of the polar groups on the polyacrylate block. Therefore, the addition of the plasticizer that is equivalent to covering the polar groups on the polyacrylate block plays a shielding role. As a result, the physical crosslinking points are reduced. On the other hand, the molecules of the plasticizer are much smaller than those of the polyacrylate block and thus move easily, which can conveniently provide space required by the movement of chain segments, reduce the glass transition temperature of the material, increase the cold resistance of the material, and improve the processability of the material.

In one embodiment, for the ACM copolymer described above, in the case that the polyacrylate copolymer itself is 100 parts by mass, optionally the plasticizer itself is 1-13 parts by mass. As shown in FIG. 4, with the increase of the dosage of the plasticizer, the glass transition temperature of the material is decreased, but accordingly, the tensile strength of the material is also decreased. When the plasticizer content is 15, the tensile strength of the material is greatly reduced. In addition, the excessive plasticizer will precipitate from the interior of the material, thereby reducing

the mechanical properties of the material. When the part by mass of the plasticizer itself meets the range described above, it can be ensured that the performance of the polyacrylate copolymer can meet the performance requirement of the diaphragm. Preferably, the plasticizer itself is 3-10 parts by mass.

In another embodiment, for the AEM copolymer described above, in the case that the polyacrylate copolymer itself is 100 parts by mass, optionally the plasticizer itself is 1-10 parts by mass. As shown in FIG. 5, with the increase of the dosage of the plasticizer, the glass transition temperature of the material is decreased, but accordingly, the tensile strength of the material is also decreased. When the plasticizer content is 12, the tensile strength of the material is greatly reduced. In addition, the excessive plasticizer will precipitate from the interior of the material, thereby reducing the mechanical properties of the material. Preferably, the plasticizer itself is 3-7 parts by mass.

Optionally, the polyacrylate copolymer may be mixed with a reinforcing agent comprising at least one of carbon black, silica, calcium carbonate, and barium sulfate. In the case that the polyacrylate copolymer itself is 100 parts by mass, the reinforcing agent itself is 1-90 parts by mass.

The surface of the reinforcing agent has hydrogen, carboxyl, lactone, radical, quinone and other groups that can undergo substitution, reduction, oxidation, or the like. After the polyacrylate copolymer is mixed with the reinforcing agent, due to strong interaction between the reinforcing agent and the interface of the polymer block, when the material is stressed, molecular chains are easy to slide on the surfaces of the reinforcing agent particles but not easy to separate from the reinforcing agent particles. The polyacrylate copolymer and the reinforcing agent particles form a slidable strong bond, thereby increasing the mechanical strength.

For example, carbon black is of an amorphous structure, and particles form aggregates by physicochemical bonding with each other. The primary structure of the carbon black is formed by the aggregates, and meanwhile, van der waals' force or hydrogen bonds exist among the aggregates, so that the aggregates can be aggregated into a spatial network structure, namely the secondary structure of the carbon black. The surface of the carbon black has the groups described above. The carbon black particles and the molecular chains of the copolymer can show the relationship described above, which enhances the mechanical strength of the polyacrylate copolymer. However, an extremely high mechanical strength will instead result in extremely high resonant frequency and reduced low-frequency response capability to the miniature sound-generating device.

In one embodiment, for the ACM copolymer described above, in the case that the polyacrylate copolymer itself is 100 parts by mass, optionally the reinforcing agent itself is 1-85 parts by mass. As shown in FIG. 6, for example, when 0.5 parts by mass of carbon black are selected as a reinforcing agent, the polyacrylate copolymer has both small mechanical strength and elongation at break, which is due to the small amount of the carbon black that is dispersed unevenly in the matrix and hardly exhibits a reinforcing effect. With the increase of the part by mass of the carbon black itself, the mechanical strength of the ACM copolymer increases, while the elongation at break gradually decreases. Particularly, when the carbon black is 90 parts by mass, the elongation at break is reduced to 83%. In this case, the made diaphragm runs the risk of breaking during long-term use. Therefore, preferably, when the reinforcing agent is 1-85 parts by mass, the requirements of the present disclosure for the performance of the diaphragm can be better met. Preferably, the reinforcing agent itself is 2-75 parts by mass.

In another embodiment, for the AEM copolymer described above, in the case that the polyacrylate copolymer itself is 100 parts by mass, the reinforcing agent itself is 1-90 parts by mass. As shown in FIG. 7, for example, when 0.5 part by mass of carbon black is selected as a reinforcing agent, the polyacrylate copolymer has low mechanical strength and low elongation at break, which is due to the small amount of the carbon black that is dispersed unevenly in the matrix and hardly exhibits a reinforcing effect. With the increase of the part by mass of the carbon black itself, the mechanical strength of the AEM copolymer increases, while the elongation at break gradually decreases. Particularly, when the carbon black is 95 parts by mass, the elongation at break is reduced to 95%. In this case, the made diaphragm runs the risk of breaking during long-term use. Therefore, optionally, when the reinforcing agent is 1-90 parts by mass, the requirements of the present disclosure for the performance of the diaphragm can be met. Preferably, the reinforcing agent itself is 2-70 parts by mass.

Optionally, the polyacrylate copolymer is mixed with a crosslinking agent, and the crosslinking agent comprises a peroxide crosslinking agent and an auxiliary crosslinking agent. The peroxide crosslinking agent is used to enable the "ethylene-acrylate copolymer" to generate free radicals. The auxiliary crosslinking agent is used for free radical polymerization with the "ethylene-acrylate copolymer".

The peroxide crosslinking agent comprises at least one of 1,3-1,4-bis(tert-butylperoxyisopropyl)benzene, dicumyl peroxide, 2,5-dimethyl-2,5-bis(tert-butylperoxy)hexane, tert-butylcumyl peroxide, 2,5-dimethyl-2,5-bis(tert-butylperoxy)-3-hexyne, 4,4'-bis(tert-butylperoxy) n-butyl valerate, 1,1'-(tert-butylperoxy)-3,3,5-trimethyl cyclohexane, and 2,4-dichlorobenzoyl peroxide.

The auxiliary crosslinking agent comprises at least one of trimethylolpropane triacrylate, trimethylolpropane trimethacrylate, N,N'-phenylene bismaleimide, diallyl phthalate, triallyl isocyanate and triallyl cyanate.

The crosslinking agent and the resulting crosslinking points can determine the crosslinking degree of the polyacrylate copolymer. When the quantity of the crosslinking points is larger within a certain range, the dosage of the

crosslinking agent is larger, and the crosslinking degree is higher. The extremely high crosslinking degree will cause the molecular chains to move more difficulty, the glass transition temperature of the polyacrylate copolymer to rise, and the damping factor to increase. Moreover, when the mechanical strength of the material is higher, the elongation at break and the elastic recovery rate are lower.

Further, the material of the diaphragm may also comprise an amide crosslinked polymer and/or an imide crosslinked polymer formed by reacting the "ethylene-acrylate-carboxylic acid copolymer" with an amine-based crosslinking agent. The amine-based crosslinking agent comprises at least one of hexamethylene diamine, hexamethylene diamine carbamate, triethylene tetramine, methylene dianiline and di-o-tolylguanidine.

The glass transition temperature can be adjusted by adjusting the mass ratio of the polyethylene block to the polyacrylate block, the content of the polycarboxylic acid block and the dosage of the crosslinking agent. For example, when the mass ratio of the polyethylene block to the polyacrylate block is 0.2-5, the mass percent of the polycarboxylic acid block is 1-5 wt%, and the addition amount of the crosslinking agent is 1-5 parts, the glass transition temperature of the polyacrylate rubber is less than or equal to -20 °C. The glass transition temperature enables the diaphragm of a loudspeaker to keep a high-elastic state at normal temperature and good resilience. Further, the use temperature of the diaphragm has a high upper limit due to a stable hinge structure of the polyacrylate copolymer. Tests show that the miniature sound-generating device can continuously work for more than 72 h at 200 °C, and can meet the application requirements for high and low temperature resistance and long-time operation. There is no risk of excess temperature and structural collapse during field use.

Optionally, the polyacrylate copolymer is mixed with an anti-aging agent comprising at least one of an anti-aging agent N-445, an anti-aging agent 246, an anti-aging agent 4010, an anti-aging agent SP, an anti-aging agent RD, an anti-aging agent ODA, an anti-aging agent OD and an anti-aging agent WH-02. The anti-aging agent itself is 0.5-10 parts by mass.

During the use of the polyacrylate rubber, the molecular chains of the polyacrylate copolymer gradually break with the passage of time to generate free radicals. This phenomenon is a natural aging phenomenon of the polyacrylate rubber. The self-catalysis phenomenon of generating active free radicals in the polyacrylate rubber can be prevented, stopped or slowed down by mixing the polyacrylate copolymer with the anti-aging agent. If the mixing amount of the anti-aging agent is too small, the effect of prolonging the service life of the polyacrylate rubber may not be achieved. However, if the amount of the anti-aging agent mixed is too large, it is difficult for the anti-aging agent to be sufficiently miscible with the polyacrylate copolymer and to be uniformly dispersed, and thus it is possible to cause a deterioration in the mechanical properties of the polyacrylate copolymer. Therefore, in the case that the polyacrylate copolymer is 100 parts by mass, the anti-aging agent itself may be optionally in a range of 0.5-10 parts by mass. Preferably, the anti-aging agent itself is 1-5 parts by mass.

Optionally, the polyacrylate copolymer is mixed with an internal releasing agent. The internal releasing agent comprises at least one of stearic acid and stearate, octadecyl amine and alkyl phosphate, and $\alpha$-octadecyl-$\omega$-hydroxy polyoxyethylene phosphate.

The mooney viscosity and green strength of the polyacrylate rubber comprising the "ethylene-acrylate copolymer" are relatively low. This performance characteristic will cause roller sticking, mold sticking and other process problems in the injection molding process of the polyacrylate rubber. The processing property of the copolymer described herein is improved by adding the internal releasing agent into a sizing material of the polyacrylate copolymer.

If the mixing amount of the internal releasing agent is small, it is difficult to improve the problem of film sticking. If the mixing amount of the internal releasing agent is too large, a decrease in the adhesive force between the polyacrylate rubber and the adhesive layer in the later preparation of the diaphragm will be easily caused, so that the performance of the finally prepared diaphragm is adversely affected. In the embodiment of the present disclosure, in the case that the polyacrylate copolymer is 100 parts by mass, the internal releasing agent itself is optionally 0.5-5 parts by mass. Preferably, the internal releasing agent itself is 1-3 parts by mass.

Optionally, the glass transition temperature of the diaphragm is in a range of -70 °C to 0 °C. Due to its high molecular weight and flexible molecular chains, the polyacrylate copolymer has better low-temperature resistance. When the glass transition temperature of the diaphragm is in the range described above, the diaphragm of the loudspeaker can keep a high-elastic state at normal temperature and good resilience. When the glass transition temperature is lower within a certain range, the diaphragm can normally work at a lower temperature. In the case that the thickness of the diaphragm is unchanged, the lower the glass transition temperature is, the lower the resonant frequency F0 of the assembled miniature sound-generating device is.

In one embodiment, for the ACM copolymer described above, the glass transition temperature of the diaphragm may be optionally in a range of -60 °C to 0 °C, and preferably -50 °C to -20 °C. This enables the diaphragm of the loudspeaker to maintain good elasticity at all times when working below 0 °C, so that the loudspeaker shows high tone quality. Meanwhile, the damage risk of the diaphragm of the loudspeaker in a low-temperature environment is reduced, and the reliability is higher.

In another embodiment, for the AEM copolymer described above, the glass transition temperature of the diaphragm is preferably in a range of -60 °C to -20 °C. This enables the diaphragm of the loudspeaker to maintain good elasticity at all times when working below 0 °C, so that the loudspeaker shows high tone quality. Meanwhile, the damage risk of the diaphragm of the loudspeaker in a low-temperature environment is reduced, and the reliability is higher.

Since the polyacrylate copolymer adopted by the present disclosure contains a large quantity of ester groups, it can form hydrogen bonding with the adhesive layer during the manufacture of the diaphragm and thus has excellent adhesion. Optionally, the adhesive force between the polyacrylate copolymer and the adhesive layer is greater than 100 g/25 mm (180° peeling), and preferably, greater than 200 g/25 mm (180° peeling). Owning to high adhesive force, the diaphragm has good coordination consistency with the Dome in the vibration process, the tone quality is pure, the diaphragm of the loudspeaker still keeps an initial state after vibrating for a long time, and the performance stability is high.

The adhesive force of the diaphragm mainly plays a role in two aspects. In a special embodiment of the present disclosure, the diaphragm may be a composite diaphragm. That is, the diaphragm comprises a plurality of film layers, wherein at least one film layer is made of the polyacrylate copolymer. The plurality of film layers can be compounded by means of gluing, hot pressing, etc., to form the composite diaphragm described above. The good adhesion of the polyacrylate copolymer can ensure the structural stability and reliability of the composite diaphragm. On the other hand, the diaphragm needs to be adhered and assembled with a voice coil, a centering disk, a reinforcement (DOME) and the like through an adhesive layer in practical applications. The good adhesion of the diaphragm can play a role in assembly and improve the acoustic performance and structural reliability of the miniature sound-generating device product.

Optionally, the type of the adhesive layer comprises one or more of epoxides, acrylic acids, organic silicon resins, polyesters, polyurethanes, hydroxyl-modified vinyl resins, phenolic resins, and urea resins.

Optionally, the diaphragm has an elongation at break greater than 100%. Preferably, the diaphragm has an elongation at break greater than 150%. The high elongation at break makes the diaphragm less susceptible to reliability problems such as breakage when used in the sound-generating device.

As shown in FIG. 8, the strain of the diaphragm provided in the embodiment of the present disclosure is significantly greater than that of the PEEK diaphragm in the prior art under the same stress. This shows that the young's modulus of the diaphragm provided in the embodiment of the present disclosure is significantly smaller than that of the PEEK diaphragm in the prior art.

In addition, the exiting PEEK diaphragm forms a significant yield point, which is about 0.4%-0.5% of the strain, whereas diaphragm of the loudspeaker provided by the present disclosure has no yield point. This shows that the diaphragm provided by the present disclosure has a wider elastic area and excellent resilience.

The diaphragm made of the polyacrylate copolymer has good flexibility. For example, the elongation at break is greater than or equal to 100%. Among them, the polyethylene block has an important influence on the elongation at break and can be selected by those skilled in the art according to actual needs. This results in larger vibration displacement and loudness, as well as high reliability and durability to the diaphragm of the loudspeaker. When the flexibility of the material is higher, the elongation at break is higher, and the damage resisting ability of the diaphragm is stronger. When the diaphragm vibrates in a large-amplitude state, the material generates a large strain and runs a risk of film folding, fracture or breakage during long-time vibration. The diaphragm of the present disclosure that takes the polyacrylate copolymer as a base material has high flexibility, thereby reducing the damage risk of the diaphragm. The diaphragm with a higher elongation at break has a lower ratio of breakage in long-term use.

Compared with engineering plastics, the polyacrylate copolymer provided by the present disclosure has a wider elastic area. When the strain of the diaphragm occurs in this area, the diaphragm has excellent resilience after external force is removed. Accordingly, the diaphragm has less swing vibration and better tone quality and audition stability in the vibration process. Further, it can be continuously used at 200 °C, and has higher damping performance than those of existing materials. For example, the diaphragm made of the AEM copolymer has an elastic recovery rate of greater than or equal to 90% after the film layer generates 20% strain. Due to the good resilience of the diaphragm, the sound-generating device has better transient response and lower distortion.

As shown in FIGs. 9 and 10, the diaphragm provided by the present disclosure has lower THD (total harmonic distortion) and HOHD and no peak, as compared to the existing PEEK diaphragm. This shows that the diaphragm of the present disclosure has better anti-polarization capability and higher tone quality.

The diaphragm provided by the present disclosure is in a high-elastic state at room temperature, molecular chains are easy to move, the intermolecular friction is large, and thus the diaphragm has better damping performance. Optionally, the diaphragm has a loss factor greater than 0.06. The excellent damping performance provides lower impedance for the diaphragm. The damping performance of the diaphragm is improved, and the ability of a vibration system of the sound-generating device to prevent a polarization phenomenon in the vibration process is enhanced, resulting in high vibration uniformity. However, the diaphragm made of existing engineering plastics has low damping, a loss factor generally less than 0.01, and low damping performance. Preferably, the diaphragm provided by the present disclosure has a loss factor greater than 0.1.

FIG. 11 shows test curves of vibrating displacements of different parts of the diaphragm of the sound-generating device at different frequencies according to an embodiment of the present disclosure. FIG. 12 shows test curves of

vibrating displacements of different parts of an existing diaphragm at different frequencies.

Among them, the diaphragm is a rectangular folded-ring diaphragm. The abscissa is the frequency (Hz), while the ordinate is the loudness displacement (mm). Points are taken at an edge position and center position of the center part of the diaphragm for testing.

As can be seen, the curves in FIG. 11 are more concentrated, while the curves in FIG. 12 are dispersed. This shows that the vibration consistency of all parts of the diaphragm of the sound-generating device according to an embodiment of the present disclosure is better, and in the process of vibration, the shaking vibration of the diaphragm is less, and the tone quality and the audition stability are higher.

Optionally, the diaphragm has a shore hardness in a range of 15-90 A, and preferably 20-80 A. The resonant frequency F0 of the sound-generating device is in direct proportion to the modulus, stiffness and thickness of the diaphragm. For the polyacrylate copolymer, the modulus is in direct proportion to the stiffness. Therefore, the modulus of the diaphragm can be reflected by the stiffness.

The strength and hardness of the polyacrylate copolymer can be adjusted by means of the reinforcing agent. On the other hand, an increase in the amount of the polyacrylate block will lead to an increase in the quantity of intermolecular hydrogen bonds, and further an increase in the strength and hardness of the material and the amount of crosslinking points. When the strength and hardness of the polyacrylate copolymer are higher, the F0 of the diaphragm is higher. Accordingly, the loudness of the sound-generating device is reduced and the bass performance is deteriorated. FIG. 13 shows impedance curves of diaphragms having the same thickness but varied stiffness. As can be seen from this figure, with the increase of the stiffness, the F0 increases dramatically.

The diaphragm of the miniature sound-generating device provided by the present disclosure is a folded-ring diaphragm or a flat-plate diaphragm. The resonant frequency F0 of the sound-generating device is in direct proportion to the Young modulus and thickness of the diaphragm. The change of the F0 can be achieved by changing the thickness and Young modulus of the diaphragm of the loudspeaker, and the specific principle of regulation is as follows:

$$F0 = \frac{1}{2\pi}\sqrt{\frac{1}{CmsMms}}$$

wherein Mms is the equivalent vibration quality of the loudspeaker, and Cms is the equivalent compliance of the loudspeaker:

$$Cms = \frac{(C_{m1} * C_{m2})}{(C_{m1} + C_{m2})}$$

wherein $C_{m1}$ is the elastic wave compliance, $C_{m2}$ is the diaphragm compliance, and the equivalent compliance of the loudspeaker is the diaphragm compliance when there is no elastic wave design:

$$C_{m2} = \frac{(1 - \mathrm{u}^3)\mathrm{W}^3}{\pi(W + dvc)\mathrm{t}^3\mathrm{Ea}_1\mathrm{a}_2}$$

wherein W is the total width of the folded ring part of the diaphragm, t is the thickness of the diaphragm, dvc is the joint outer diameter of the diaphragm and the voice coil, E is the Young modulus of the diaphragm material, and u is the Poisson's ratio of the diaphragm material.

As can be seen, the resonant frequency F0 of the sound-generating device is in direct proportion to the modulus and thickness of the diaphragm. In addition, the modulus of the diaphragm is also in direct proportion to its stiffness. Therefore, the stiffness may be used instead of its modulus. In order to get full bass and comfortable listening, the diaphragm should have sufficient stiffness and damping while the sound-generating device has a low resonance frequency F0. Those skilled in the art may adjust the magnitude of the F0 by adjusting the stiffness and thickness of the diaphragm of the loudspeaker. Preferably, the diaphragm has a shore hardness of preferably 20-80 A, and a thickness of 60-120 μm, which can make the resonance frequency F0 of the miniature sound-generating device reach 150-1500 HZ within the above preferred range. The low-frequency performance of the miniature sound-generating device is excellent.

Optionally, the diaphragm may be of a single-layer structure, or may be a multi-layer composite diaphragm.

The single-layer diaphragm is a diaphragm formed by a polyacrylate copolymer film layer. The composite diaphragm is a diaphragm formed by sequentially laminating a plurality of polyacrylate copolymer film layers. Alternatively, the composite diaphragm may comprise at least one polyacrylate copolymer film layer, and film layers made of the polyacrylate copolymer film layer and other materials are laminated and compounded to form the composite diaphragm made of multiple materials. The composite diaphragm may be a two-layer, three-layer, four-layer or five-layer composite diaphragm, which is not limited in the present disclosure. At least one film layer in the composite diaphragm is a polyacrylate copolymer film layer made of the polyacrylate copolymer provided by the present disclosure.

The polyacrylate copolymer film layer has a thickness optionally selected from 10-200 μm, and preferably from 30-120 μm. When the thickness of the polyacrylate copolymer film layer is within this range, the performance requirement and the assembly space requirement of the miniature sound-generating device can be better met.

The present disclosure provides a comparison curve of a specific embodiment of the diaphragm provided by the present disclosure and the existing diaphragm, as shown in FIG. 14. FIG. 14 shows test curves (SPL curves) of the loudness of two diaphragms at different frequencies. The diaphragm is a folded-ring diaphragm. The abscissa is frequency (Hz) and the ordinate is loudness.

The dotted line is a test curve of the diaphragm for the miniature sound-generating device provided by the present disclosure. The solid line is a test curve of the existing diaphragm.

As can be seen from the SPL curve, the two diaphragms have similar intermediate frequency performance. The miniature sound-generating device using the diaphragm provided by the present disclosure has an F0 of 806 Hz, i.e., at the position a in the figure. The sound-generating device using the existing diaphragm has an F0 of 886 Hz, i.e. at the position b in the figure. This shows that the low-frequency sensitivity of the diaphragm of the embodiment of the present disclosure is higher than that of the existing PEEK diaphragm. That is to say, by adopting the diaphragm provided by the present disclosure, the miniature sound-generating device can have larger loudness and higher comfort.

The present disclosure also provides a miniature sound-generating device comprising a sound-generating device body and the diaphragm made of the polyacrylate copolymer described above. The polyacrylate copolymer may be the AEM copolymer described above, or may be the ACM copolymer described above, which is not limited in the present disclosure. The diaphragm is arranged on the sound-generating device body and is configured such that it can be driven to vibrate and further produce sound by vibration. The sound-generating device body can be provided with a coil, a magnetic circuit system and other components, and the diaphragm is driven through electromagnetic induction to vibrate.

Although some specific embodiments of the present disclosure have been described in detail by way of examples, it should be appreciated by those skilled in the art that the above examples are merely for illustration and not intended to limit the scope of the present disclosure. It will be appreciated by those skilled in the art that modifications can be made to the above embodiments without departing from the scope and spirit of the present disclosure. The scope of the present disclosure is defined by the appended claims.

## Claims

1. A diaphragm for a miniature sound-generating device, wherein the diaphragm is made of a polyacrylate copolymer, the polyacrylate copolymer is mixed with a plasticizer comprising at least one of aliphatic diacid esters, phthalic acid esters, phenyl polyacid esters, benzoates, polyhydric alcohol esters, chlorinated hydrocarbons, epoxides, citrates and polyesters, the glass transition temperature of the diaphragm is in the range of -70 °C to 0 °C, and the diaphragm is configured such that the adhesive force between the diaphragm and an adhesive layer during assembly is greater than 100 g/25 mm (180° peeling).

2. The diaphragm according to claim 1, wherein the polyacrylate copolymer is made by crosslinking polymerization of alkyl acrylate serving as a main polymerization monomer and a crosslinking monomer, and the glass transition temperature of the diaphragm is in the range of - 60 °C to 0 °C.

3. The diaphragm according to claim 2, wherein the glass transition temperature of the diaphragm is in the range of -50 °C to -20 °C.

4. The diaphragm according to claim 2, wherein the polyacrylate copolymer itself is 100 parts by mass, and the plasticizer itself is 1-13 parts by mass.

5. The diaphragm according to claim 2, wherein the polyacrylate copolymer is mixed with a vulcanizing agent, the polyacrylate copolymer itself is 100 parts by mass, and the vulcanizing agent itself is 0.5-5 parts by mass.

6. The diaphragm according to claim 1, wherein the polyacrylate copolymer comprises at least one of an "ethylene-acrylate copolymer" and an "ethylene-acrylate-carboxylic acid copolymer".

7. The diaphragm according to claim 6, wherein the glass transition temperature of the diaphragm is in the range of -60 °C to -20 °C.

8. The diaphragm according to claim 6, wherein the polyacrylate copolymer itself is 100 parts by mass, and the plasticizer itself is 1-10 parts by mass.

9. The diaphragm according to claim 1, wherein the adhesive force between the diaphragm and the adhesive layer is greater than 200 g/25 mm (180° peeling).

10. The diaphragm according to claim 1, wherein the polyacrylate copolymer is mixed with an internal releasing agent comprising at least one of stearic acid and stearate, octadecyl amine and alkyl phosphate, and α-octadecyl-ω-hydroxy polyoxyethylene phosphate, the polyacrylate copolymer itself is 100 parts by mass, and the internal releasing agent itself is 0.5-5 parts by mass.

11. The diaphragm according to claim 10, wherein the internal releasing agent itself is 1-3 parts by mass.

12. The diaphragm according to claim 1, wherein the diaphragm is a single-layer diaphragm formed by a polyacrylate copolymer film layer;
or the diaphragm is a composite diaphragm comprising two, three, four or five film layers and comprising at least one polyacrylate copolymer film layer.

13. The diaphragm according to claim 12, wherein the polyacrylate copolymer film layer has a thickness of 10-200 μm.

14. The diaphragm according to claim 13, wherein the polyacrylate copolymer film layer has a thickness of 30-120 μm.

15. The diaphragm according to claim 1, wherein the type of the adhesive layer comprises one or more of epoxides, acrylic acids, organic silicon resins, polyesters, polyurethanes, hydroxyl-modified vinyl resins, phenolic resins, and urea resins.

16. A miniature sound-generating device, comprising a sound-generating device body and the diaphragm according to any one of claims 1-15, wherein the diaphragm is arranged on the sound-generating device body and is configured to produce sound by vibration.

| Mass ratio of the polyethylene block to the polyacrylate block | 0.05 | 0.1 | 0.2 | 5 | 10 | 15 |
|---|---|---|---|---|---|---|
| Glass transition temperature (°C) | -15.3 | -17.8 | -23.6 | -30.7 | -34.8 | -39.4 |
| Mechanical strength (MPa) | 15.8 | 15.8 | 15.5 | 15.1 | 9.7 | 6.3 |

FIG. 1

| Mass percent of the polycarboxylic acid block (wt%) | 0.1 | 0.5 | 1 | 5 | 10 | 15 |
|---|---|---|---|---|---|---|
| Glass transition temperature (°C) | -35.1 | -35 | -34.6 | -33.7 | -31.2 | -30.9 |
| Elongation at break (%) | 353 | 328 | 315 | 271 | 237 | 141 |

FIG. 2

| Part by mass of the vulcanizing agent | 0.2 | 0.5 | 0.8 | 3 | 5 | 8 |
|---|---|---|---|---|---|---|
| Glass transition temperature (°C) | -33.1 | -29.7 | -25.3 | -20.4 | -18.9 | -14.9 |
| Elongation at break (%) | 394 | 348 | 317 | 231 | 157 | 101 |

FIG. 3

| Parts by mass of the plasticizer | 0.5 | 1 | 3 | 10 | 13 | 15 |
|---|---|---|---|---|---|---|
| Glass transition temperature (°C) | -18.1 | -22.7 | -25.4 | -28.9 | -35.9 | -39.6 |
| Mechanical strength of the material (MPa) | 17.5 | 17.4 | 17.2 | 16.8 | 16.1 | 12.2 |

FIG. 4

| Parts by mass of the plasticizer | 0.5 | 1 | 3 | 7 | 10 | 12 |
|---|---|---|---|---|---|---|
| Glass transition temperature (°C) | -27.3 | -28.1 | -32.6 | -35.7 | -35.9 | -36.8 |
| Mechanical strength of the material (MPa) | 16.5 | 16.4 | 16.2 | 16.1 | 16.1 | 15.3 |

FIG. 5

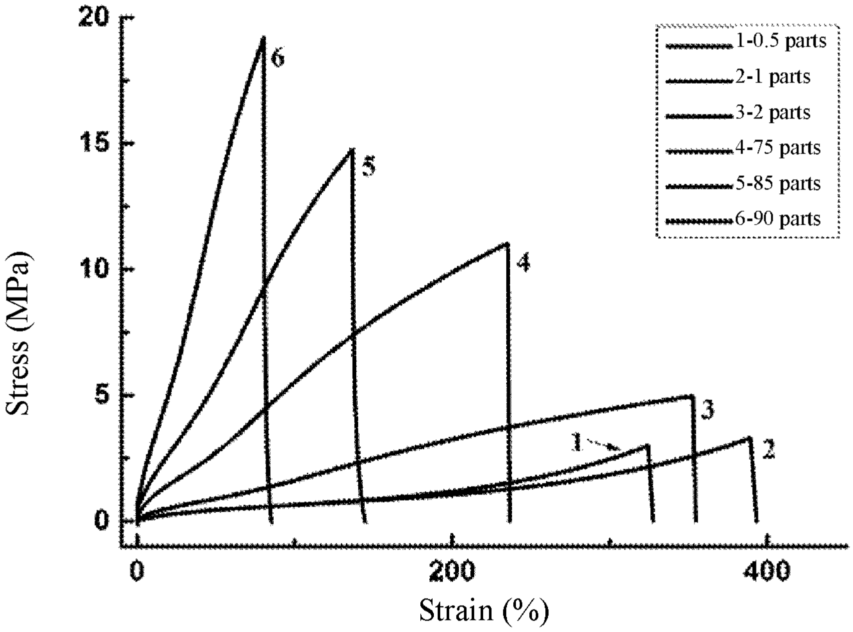
20
15
10
5
0
Stress (MPa)
0
200
400
Strain (%)
1-0.5 parts
2-1 parts
3-2 parts
4-75 parts
5-85 parts
6-90 parts
1
2
3
4
5
6

FIG. 6

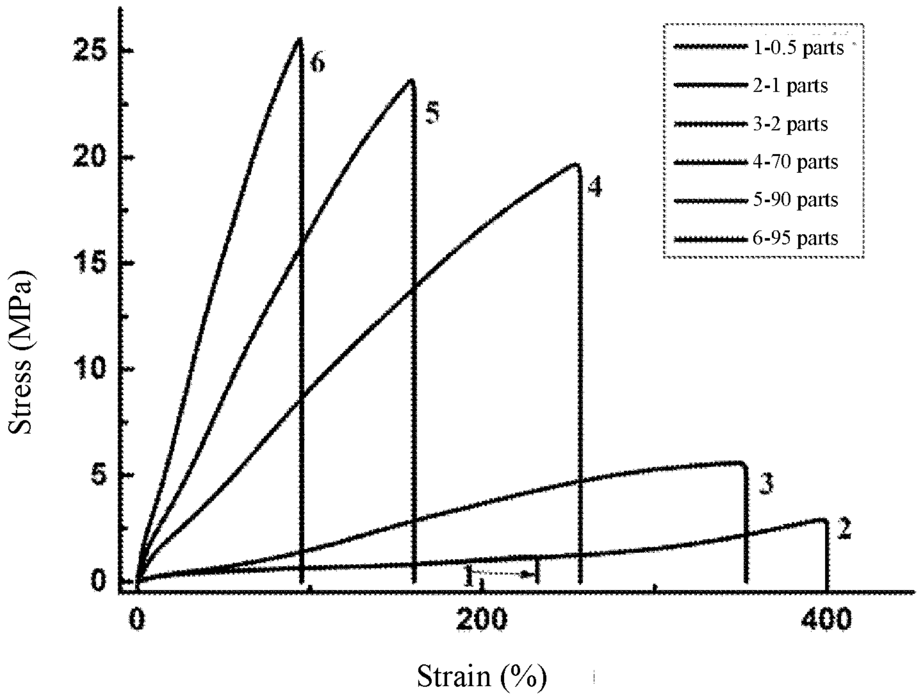
25
20
15
10
5
0
Stress (MPa)
0
200
400
Strain (%)
1-0.5 parts
2-1 parts
3-2 parts
4-70 parts
5-90 parts
6-95 parts
1
2
3
4
5
6

FIG. 7

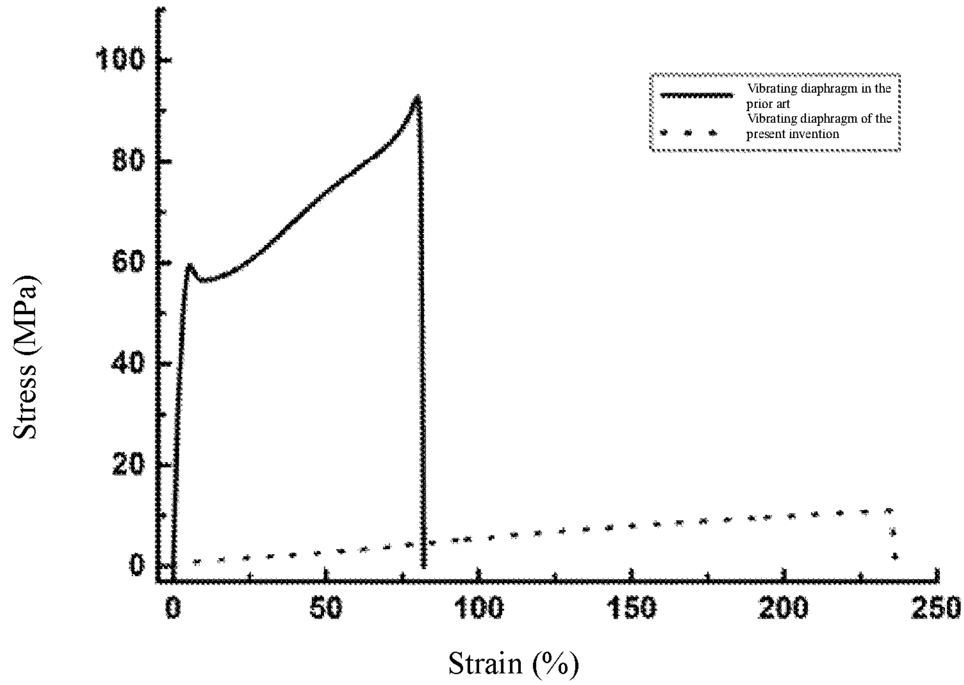
Vibrating diaphragm in the prior art
Vibrating diaphragm of the present invention
Stress (MPa)
Strain (%)
0
20
40
60
80
100
0
50
100
150
200
250

FIG. 8

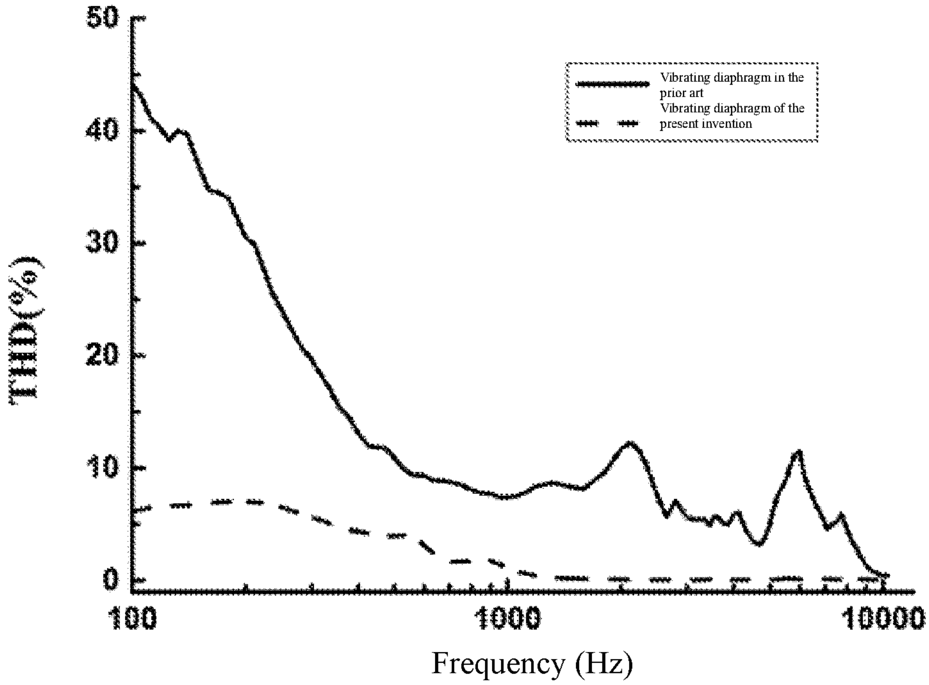
Vibrating diaphragm in the prior art
Vibrating diaphragm of the present invention
THD(%)
Frequency (Hz)
0
10
20
30
40
50
100
1000
10000

FIG. 9

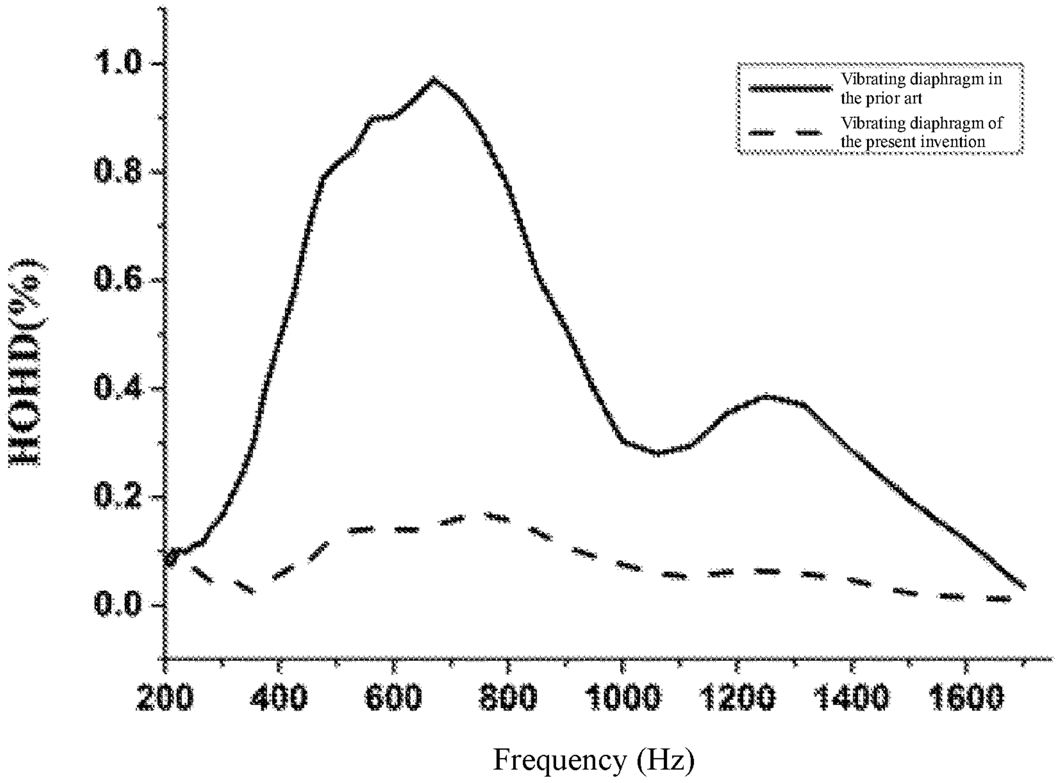

1.0
0.8
0.6
0.4
0.2
0.0
HOHD(%)
200
400
600
800
1000
1200
1400
1600
Frequency (Hz)
Vibrating diaphragm in the prior art
Vibrating diaphragm of the present invention


FIG. 10

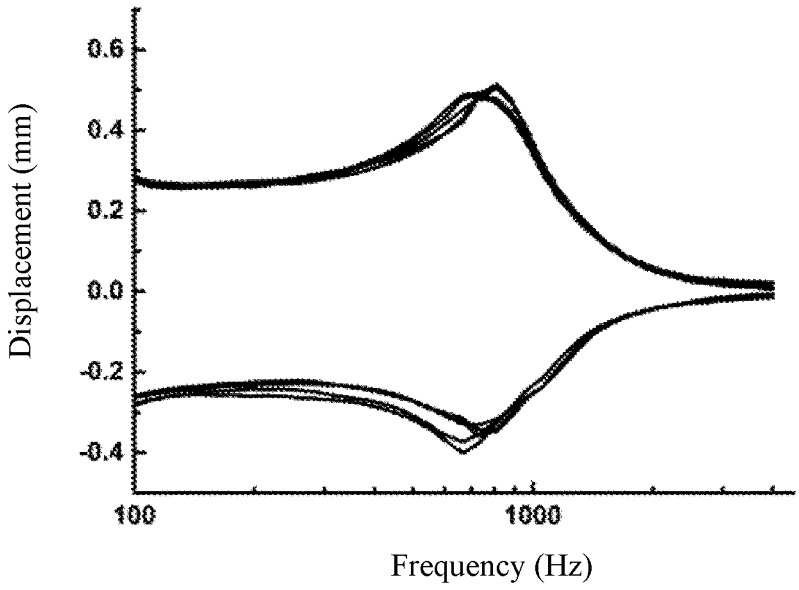

0.6
0.4
0.2
0.0
-0.2
-0.4
Displacement (mm)
100
1000
Frequency (Hz)


FIG. 11

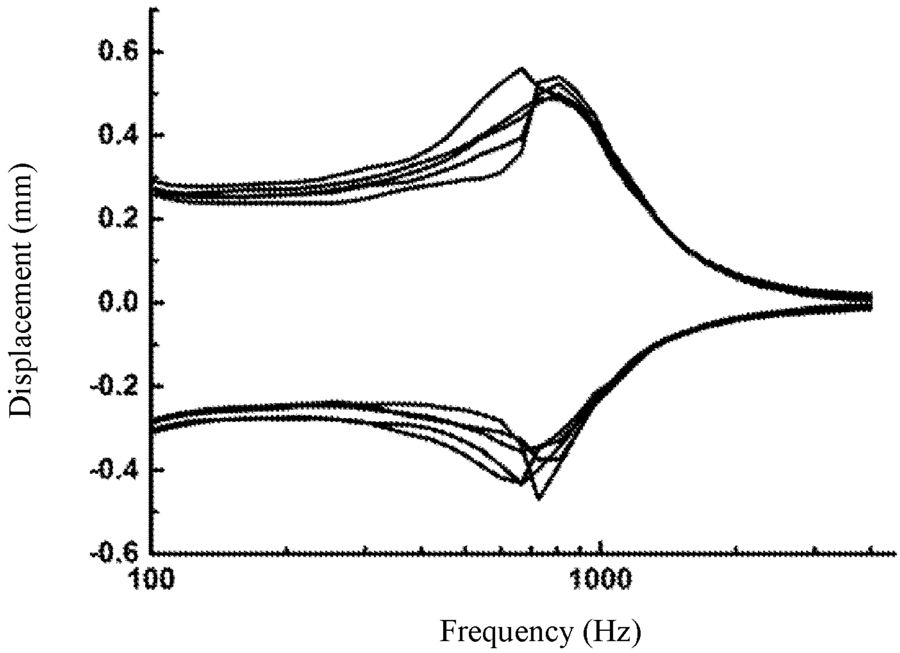
0.6
0.4
0.2
0.0
-0.2
-0.4
-0.6
Displacement (mm)
100
1000
Frequency (Hz)

FIG. 12

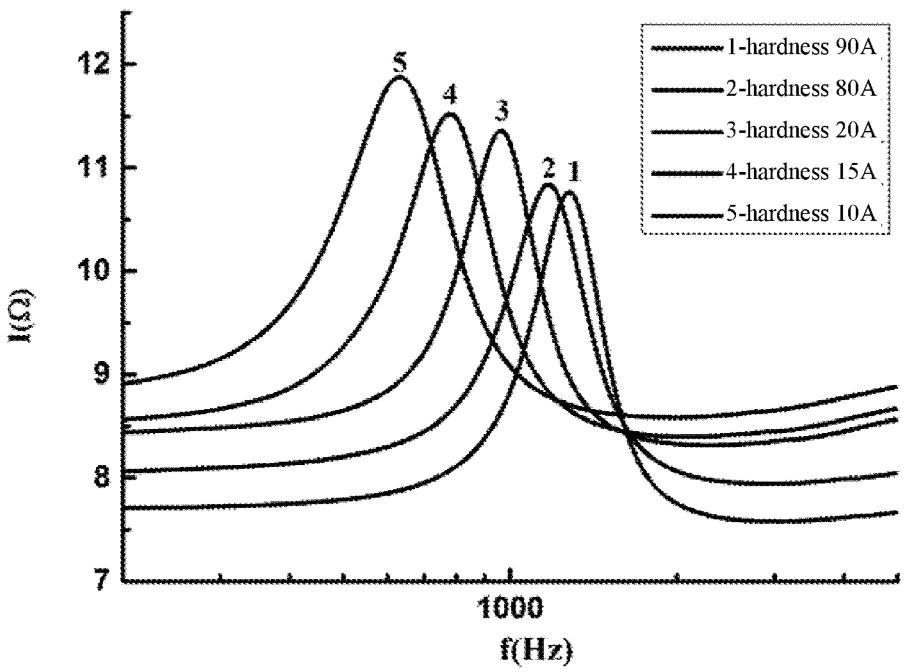
12
11
10
9
8
7
I(Ω)
1000
f(Hz)
5
4
3
2
1
1-hardness 90A
2-hardness 80A
3-hardness 20A
4-hardness 15A
5-hardness 10A

FIG. 13

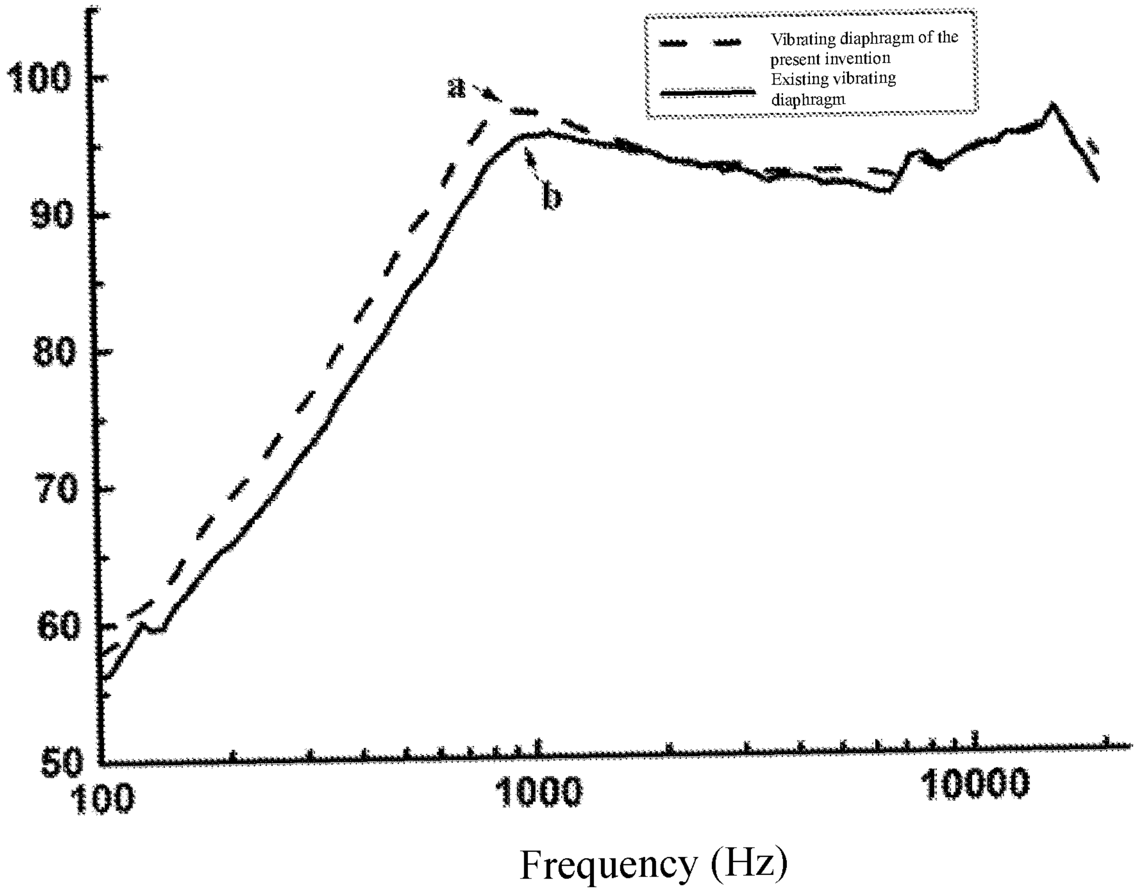
Vibrating diaphragm of the present invention
Existing vibrating diaphragm
a
b
100
90
80
70
60
50
100
1000
10000
Frequency (Hz)

FIG. 14

**INTERNATIONAL SEARCH REPORT**

International application No. **PCT/CN2020/085641**

**A. CLASSIFICATION OF SUBJECT MATTER**

H04R 7/10(2006.01)i; H04R 9/06(2006.01)i; H04R 9/02(2006.01)i

According to International Patent Classification (IPC) or to both national classification and IPC

**B. FIELDS SEARCHED**

Minimum documentation searched (classification system followed by classification symbols)

H04R; C09J; H01L; C08F; B32B

Documentation searched other than minimum documentation to the extent that such documents are included in the fields searched

Electronic data base consulted during the international search (name of data base and, where practicable, search terms used)

CNPAT, CNKI, WPI, EPODOC: 振膜, 聚丙烯酸酯, 橡胶, 共聚物, 酸酯, 乙烯, 丙烯, 羧酸, 增塑剂, 交联, 玻璃化, 质量, 弹性, 刚性, 胶层, 粘接力, Vibrating, diaphragm, Polyacrylates, Rubber composition, Copolymer, plasticizer, cross-linking , glass transition, Acid esters, ethylene, propylene, quality, elasticity, rigidity, lue line, adhesion

**C. DOCUMENTS CONSIDERED TO BE RELEVANT**

| Category* | Citation of document, with indication, where appropriate, of the relevant passages | Relevant to claim No. |
|---|---|---|
| Y | CN 103080260 A (3M INNOVATIVE PROPERTIES CO.) 01 May 2013 (2013-05-01) description paragraphs [0008], [0036]-[0046], [0116]-[0122] | 1-16 |
| Y | 方义 (FANG, Yi). "耐高温遇水膨胀橡胶材料的制备与应用研究 (The Study of Preparation and Application on Heat Resisting Water Swelling Rubber Material)" *中国优秀硕士学位论文全文数据库工程科技I辑 (China Master's Theses Full-text Database, Engineering Technology),* No. 4,, 15 April 2018 (2018-04-15), pp. 34-35 | 1-16 |
| A | CN 103756602 A (FOSHAN AOYATU ADHESIVE CO., LTD.) 30 April 2014 (2014-04-30) entire document | 1-16 |
| A | CN 102732176 A (BEIJING INSTITUTE OF AERONAUTICAL MATERIALS, AVIATION INDUSTRY CORPORATION OF CHINA) 17 October 2012 (2012-10-17) entire document | 1-16 |
| A | WO 2016027767 A1 (KURARAY CO., LTD.) 25 February 2016 (2016-02-25) entire document | 1-16 |

☑ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **03 July 2020** | **20 July 2020** |

| Name and mailing address of the ISA/CN | Authorized officer |
|---|---|
| **China National Intellectual Property Administration (ISA/CN)**<br>**No. 6, Xitucheng Road, Jimenqiao Haidian District, Beijing 100088**<br>**China** | |
| Facsimile No. **(86-10)62019451** | Telephone No. |

Form PCT/ISA/210 (second sheet) (January 2015)

**INTERNATIONAL SEARCH REPORT**

International application No.
**PCT/CN2020/085641**

**C. DOCUMENTS CONSIDERED TO BE RELEVANT**

| Category* | Citation of document, with indication, where appropriate, of the relevant passages | Relevant to claim No. |
|---|---|---|
| A | WO 2017136280 A1 (3M INNOVATIVE PROPERTIES COMPANY) 10 August 2017 (2017-08-10) entire document | 1-16 |

Form PCT/ISA/210 (second sheet) (January 2015)

**INTERNATIONAL SEARCH REPORT**
**Information on patent family members**

International application No.
**PCT/CN2020/085641**

| Patent document cited in search report | Publication date (day/month/year) | Patent family member(s) | Publication date (day/month/year) |
|---|---|---|---|
| CN 103080260 A | 01 May 2013 | JP 2013539493 A | 24 October 2013 |
| | | US 2013149502 A1 | 13 June 2013 |
| | | EP 2609165 A2 | 03 July 2013 |
| | | KR 20130106373 A | 27 September 2013 |
| | | SG 187933 A1 | 28 March 2013 |
| | | WO 2012027377 A2 | 01 March 2012 |
| CN 103756602 A | 30 April 2014 | None | |
| CN 102732176 A | 17 October 2012 | None | |
| WO 2016027767 A1 | 25 February 2016 | KR 20170044101 A | 24 April 2017 |
| | | EP 3184597 A1 | 28 June 2017 |
| | | US 2017233619 A1 | 17 August 2017 |
| | | JP WO2016027767 A1 | 01 June 2017 |
| | | TW 201614030 A | 16 April 2016 |
| | | CA 2958582 A1 | 25 February 2016 |
| | | CN 106661410 A | 10 May 2017 |
| WO 2017136280 A1 | 10 August 2017 | TW 201800245 A | 01 January 2018 |
| | | CN 108602312 A | 28 September 2018 |

Form PCT/ISA/210 (patent family annex) (January 2015)